(19) **Europäisches Patentamt European Patent Office Office européen des brevets**

(11) **EP 3 540 851 B1**

(12) **EUROPEAN PATENT SPECIFICATION**

(45) Date of publication and mention of the grant of the patent:
**30.09.2020 Bulletin 2020/40**

(51) Int Cl.:
*H01Q 1/32* *(2006.01)*        *G01S 13/93* *(2020.01)*
*H01Q 1/42* *(2006.01)*

(21) Application number: **19160216.8**

(22) Date of filing: **01.03.2019**

(54) **ANTENNA DEVICE**

ANTENNENVORRICHTUNG

DISPOSITIF D'ANTENNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.03.2018 JP 2018045503**

(43) Date of publication of application:
**18.09.2019 Bulletin 2019/38**

(73) Proprietor: **Panasonic Intellectual Property Management Co., Ltd.**
**Osaka-shi, Osaka 540-6207 (JP)**

(72) Inventors:
• **SHIOZAKI, Ryosuke**
**Osaka-shi, Osaka 540-6207 (JP)**

• **SHIBATA, Osamu**
**Osaka-shi, Osaka 540-6207 (JP)**
• **TAKAHASHI, Ken**
**Osaka-shi, Osaka 540-6207 (JP)**

(74) Representative: **Grünecker Patent- und Rechtsanwälte**
**PartG mbB**
**Leopoldstraße 4**
**80802 München (DE)**

(56) References cited:
**JP-A- 2006 140 956        US-A1- 2008 315 050**
**US-A1- 2016 231 417        US-B1- 6 496 138**

**Description**

BACKGROUND

1. Technical Field

The present disclosure relates to an antenna device.

2. Description of the Related Art

US 2008/315 050 A1 discloses an antenna device that performs transmission and reception of an electromagnetic wave via a cover member which is arranged to cover a front region of an outside of a device. The antenna device comprises an antenna that transmits the electromagnetic wave toward the front region, and receives the electromagnetic wave from the front region; a housing that has an opening in a front surface through which the electromagnetic wave passes and houses the circuit board such that transmission and reception of the electromagnetic wave are performed via the opening; and a bracket that retains the housing and fixes the housing to the cover member in a front direction of the opening. The bracket has a sheet-shaped or plate-shaped adjuster that is disposed so as to cover a region in the front direction of the opening and to closely contact with an inner surface of the cover member and adjusts pass characteristics of the electromagnetic wave in the cover member. US 6 496 138 A1 discloses an antenna device comprising an adjuster configured so that the travelling distance of the wave passing through the adjuster and the cover member becomes $n \cdot \lambda_0/2$. US 2016/231 417 A1 describes a radar assembly wherein a first dielectric member includes a dielectric outermost structural member of a vehicle. An antenna device for a radar has been known which contactlessly detects a position of an object (hereinafter, also referred to as "target") by using electromagnetic waves in a frequency band such as millimeter waves or microwaves.

An antenna device has been installed in a vehicle and used for a purpose of multidirectional monitoring such as front direction monitoring, front lateral direction monitoring, or rear lateral direction monitoring, for example. This kind of antenna device is configured to be installed in a cover member such as a bumper of a vehicle and to transmit and receive electromagnetic waves via the cover member in view of protection from a flying object from the outside of vehicle devices and in view of maintenance of appearance quality of a vehicle body.

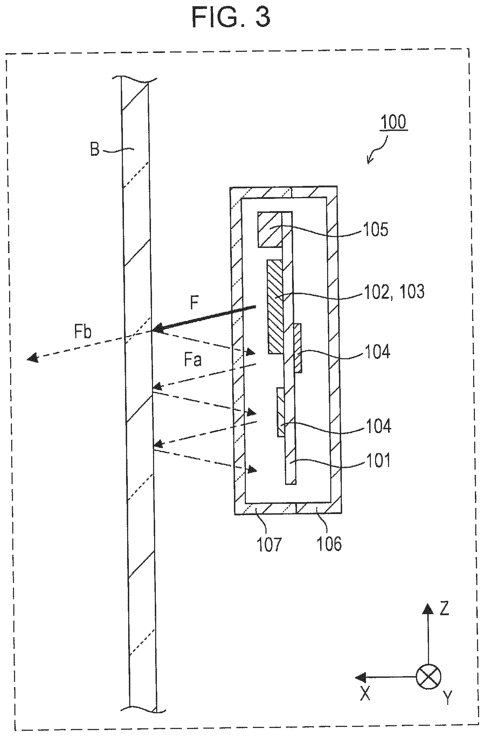

High-frequency electromagnetic waves such as millimeter waves have a property of being transmitted through an insulator (for example, a resin material that configures a bumper). However, the transmittance for the electromagnetic waves changes in accordance with the dielectric constant of the insulator, the thickness of the insulator, the incident angle on the insulator, and so forth. Thus, a portion of the electromagnetic waves transmitted by the antenna device is reflected by an inner wall of the cover member and becomes a cause of noise in a case where the antenna device performs object detection. Such reflected waves from the cover member may lead to multiple reflections between the cover member and a board on which an antenna is disposed in the antenna device (described later with reference to Fig. 3).

Japanese Unexamined Patent Application Publication No. 2009-103457 discloses that an angle of an antenna surface opposed to a cover member is inclined, propagation directions of reflected waves from the cover member are thereby averted from the antenna surface, and multiple reflections between the cover member and the antenna surface are thereby inhibited, for example.

SUMMARY

Incidentally, it is demanded that this kind of antenna device inhibit degradation of reception characteristics due to the above reflected waves from a cover member and be configured to be capable of being disposed in an arbitrary position in order to transmit electromagnetic waves in desired directions.

In this point, because an antenna surface on a board is basically disposed to be opposed to a cover member in a related art disclosed in Japanese Unexamined Patent Application Publication No. 2009-103457 and so forth, the position for disposing the antenna device may be restricted depending on the shape of the cover member. In other words, in the related art disclosed in Japanese Unexamined Patent Application Publication No. 2009-103457 and so forth, because the directions for transmitting electromagnetic waves are restricted by the shape of the cover member, electromagnetic wave may not efficiently be transmitted in desired directions.

Meanwhile, in another antenna device, an output gain may lower due to mutual phase cancellation by multiple reflections between the antenna device and a cover (bumper) member.

One non-limiting and exemplary embodiment facilitates providing an antenna device with a more desirable output gain for transmitting and receiving electromagnetic waves via a cover member.

The above and other objects of the invention are achieved by the antenna device according to claim 1. Preferred embodiments are claimed in the dependent claims.

One aspect of the present disclosure may facilitate providing an antenna device with a more desirable output gain for transmitting and receiving electromagnetic waves via a cover member.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

BRIEF DESCRIPTION OF THE DRAWINGS

Fig. 1 is a diagram that illustrates one example of a state where an antenna device according to a related art is installed in a cover member of a vehicle;

Fig. 2 is a side cross-sectional diagram that illustrates one example of a configuration of the antenna device according to the related art;

Fig. 3 is a diagram that illustrates behavior of electromagnetic waves in the antenna device according to the related art;

Fig. 4 is a side cross-sectional diagram that illustrates one example of a configuration of an antenna device according to a first embodiment;

Fig. 5 is a side cross-sectional diagram that illustrates one example of the configuration of the antenna device according to the first embodiment;

Fig. 6 is a side cross-sectional diagram in which an adjustment unit of a bracket according to the first embodiment is enlarged;

Fig. 7 is a diagram that illustrates results of a simulation for examining radar performance of the antenna device according to the first embodiment;

Fig. 8 is a diagram that illustrates results of another simulation for examining the radar performance of the antenna device according to the first embodiment;

Fig. 9 is a diagram that illustrates one example of a mode in which the cover member is configured with a laminated body;

Fig. 10 is a side cross-sectional diagram of a bracket according to a modification example 2 of the first embodiment;

Fig. 11 is a side cross-sectional diagram of a bracket according to a modification example 3 of the first embodiment;

Fig. 12 is a side cross-sectional diagram that illustrates one example of a configuration of an antenna device according to a second embodiment;

Fig. 13 is a side cross-sectional diagram that illustrates one example of the configuration of the antenna device according to the second embodiment;

Fig. 14 is a diagram in which the antenna device according to the second embodiment is seen in a plan view;

Fig. 15 is a diagram that illustrates behavior of electromagnetic waves in the antenna device according to the second embodiment;

Fig. 16 is a diagram that illustrates results of a simulation for examining the radar performance of the antenna device according to the second embodiment;

Fig. 17A is a diagram that illustrates one example of a frequency selective structure provided to an adjustment unit according to a third embodiment;

Fig. 17B is a diagram that illustrates one example of the frequency selective structure provided to the adjustment unit according to the third embodiment;

Fig. 18 is a diagram that illustrates one example of an uneven structure provided to an adjustment unit according to a fourth embodiment;

Fig. 19A is a plan diagram of the uneven structure provided to the adjustment unit according to the fourth embodiment;

Fig. 19B is a plan diagram of the uneven structure provided to the adjustment unit according to the fourth embodiment;

Fig. 19C is a plan diagram of the uneven structure provided to the adjustment unit according to the fourth embodiment;

Fig. 19D is a plan diagram of the uneven structure provided to the adjustment unit according to the fourth embodiment; and

Fig. 20 is a diagram that illustrates one example of an antenna device according to a fifth embodiment.

DETAILED DESCRIPTION

Embodiments of the present disclosure will hereinafter be described in detail with reference to the attached drawings. Note that in the specification and drawings, the same reference characters are given to configuration elements that have substantially the same functions, and descriptions thereof will not be repeated.

In each diagram, in order to make the positional relationships among configurations clear, a common orthogonal coordinate system (X, Y, Z) is indicated while the front direction in which an antenna device (hereinafter, also simply referred to as "device") transmits electromagnetic waves to the outside of the device (that is, a targeted direction of object detection) is set as a reference. In the following, descriptions will be made on an assumption that the positive direction of the X axis represents the front direction in which the antenna device transmits electromagnetic waves to the outside of the device (hereinafter, abbreviated as "front direction"), the positive direction of the Y axis represents the right direction of side surfaces of the antenna device, and the positive direction of the Z axis represents the upward direction of the antenna device (hereinafter, abbreviated as "upward direction").

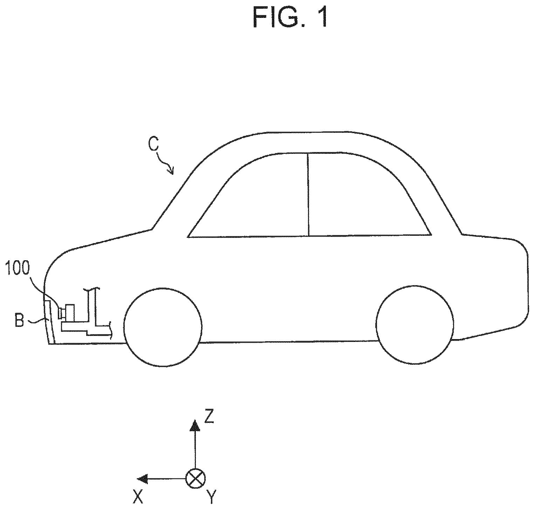

First, a description will be made with reference to Fig. 1 to Fig. 3 about an influence of electromagnetic waves reflected by a cover member on detection performance of the antenna device. Note that in the following, a description will be made about a radar device installed in a vehicle as one example to which the antenna device of the present disclosure is applied.

Fig. 1 is a diagram that illustrates one example of a state where an antenna device 100 according to a related art is installed in a cover member B of a vehicle C (here, a bumper member of a vehicle C). As illustrated in Fig. 1, the bumper member of the vehicle C has a thin plate shape that extends in the perpendicular direction to the ground. Note that here, the positive Z direction corresponds to the upward direction (the vertical direction to the ground), and the positive X direction corresponds to a traveling direction of the vehicle C (the horizontal direction to the ground).

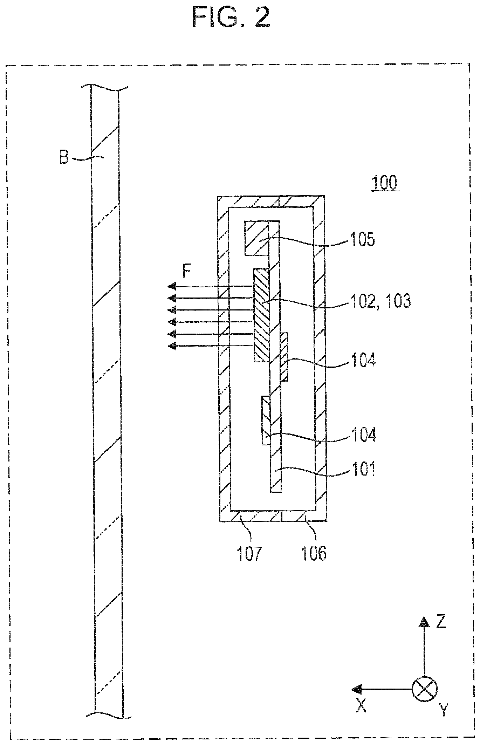

Fig. 2 is a side cross-sectional diagram that illustrates one example of a configuration of the antenna device 100 according to the related art.

The antenna device 100 according to the related art includes a circuit board 101, a transmit antenna 102, a receive antenna 103, a signal processing IC 104, a connector 105, a housing 106, and a radome 107, for example.

The transmit antenna 102, the receive antenna 103, the signal processing IC 104, and the connector 105 are mounted on a board surface of the circuit board 101.

As the transmit antenna 102 and the receive antenna 103, patch antennas or the like are used which transmit and receive electromagnetic waves in the normal direction of the board surface of the circuit board 101.

In the circuit board 101, the board surface is disposed to be directly opposed to the cover member B such that the board surface on which the transmit antenna 102 and the receive antenna 103 are disposed is directed toward the front side of the vehicle C. Accordingly, the directions of directivity of the transmit antenna 102 and the receive antenna 103 are directed to the front side of the antenna device 100. Note that solid line arrows F in Fig. 2 indicate a transmission direction of electromagnetic waves transmitted by the transmit antenna 102.

Note that the circuit board 101 is accommodated in the housing 106, and the transmit antenna 102 and the receive antenna 103 respectively performs transmission and reception of electromagnetic waves with the outside of the device via the radome 107 supported by a front surface of the housing 106.

The antenna device 100 according to the related art performs transmission and reception of electromagnetic waves via the cover member B (for example, the bumper member) and specifies the position of a target that is present on the outside of the device. Note that as illustrated in Fig. 2, the cover member B has a shape that extends in the perpendicular direction to the ground.

Fig. 3 is a diagram that illustrates behavior of electromagnetic waves in the antenna device 100 according to the related art. Fig. 3 illustrates a mode in which the antenna device 100 performs transmission and reception of electromagnetic waves in the horizontal direction to the ground such that the electromagnetic waves are transmitted through the cover member B.

In Fig. 3, the solid line arrow F indicates electromagnetic waves transmitted by the transmit antenna 102. Further, one-dot-chain line arrows Fa indicate reflected waves, which are reflected by the cover member B, of the electromagnetic waves transmitted by the transmit antenna 102. Further, a dotted line arrow Fb indicates electromagnetic waves, which are transmitted through the cover member B, of the electromagnetic waves transmitted by the transmit antenna 102. Note that here, for convenience of description, it is assumed that the electromagnetic waves transmitted by the transmit antenna 102 are not reflected by the radome 107 but pass through the radome 107 and reach the cover member B.

First, when the electromagnetic waves are transmitted from the transmit antenna 102, the electromagnetic waves pass through the radome 107 and arrive at the cover member B. The most part of the electromagnetic waves that arrive at the cover member B is transmitted through the cover member B and is transmitted toward a target on the outside of the vehicle. However, a portion thereof is reflected by a surface of the cover member B, again passes through the radome 107, and returns to the circuit board 101.

The electromagnetic waves that return to the circuit board 101 are again reflected by the circuit board 101, pass through the radome 107, and thereafter travel toward the cover member B side. Then, the electromagnetic waves repeat reflection between the cover member B and the board surface of the circuit board 101, and a portion thereof arrives at the receive antenna 103 (also referred to as "multiple reflections").

In such a manner, because multiply reflected electromagnetic waves have different phases from the reflected waves from the target, the multiply reflected electromagnetic waves and the reflected waves from the target strengthen and weaken one another in accordance with the angles of the reflected waves that arrive at the receive antenna 103. As a result, the multiply reflected electromagnetic waves lead to angles at which the receive antenna 103 may not detect the reflected waves from the target (or detection sensitivity is lowered) in spots. Further, the multiply reflected electromagnetic waves have different phases from the reflected waves from the target when the multiply reflected electromagnetic waves arrive at the receive antenna 103 and thus cause an error when azimuth estimation about the target is performed.

Further, another portion of the electromagnetic waves reflected by the surface of the cover member B repeats reflection between the cover member B and other parts of a vehicle body, travels through a complicated propagation path, and returns to the receive antenna 103 (not illustrated and also referred to as "coupling loop interference waves"). Such coupling loop interference waves are incident on the receive antenna 103 after some delay. However, in signal processing, it is difficult to distinguish the coupling loop interference waves from the reflected waves from the target. Thus, such coupling loop interference waves may cause detection of an object that is not actually present.

(First Embodiment)

[General Configuration of Antenna Device]

In the following, a description will be made about one embodiment of the present disclosure that reduces an influence by the above multiple reflections and the coupling loop interference waves.

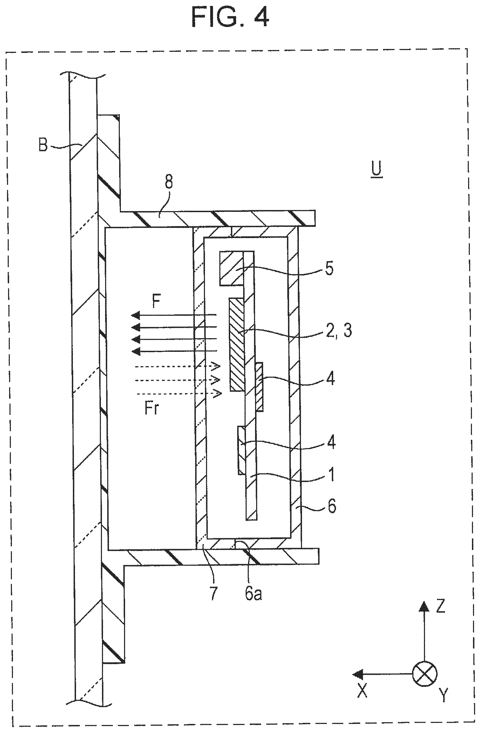

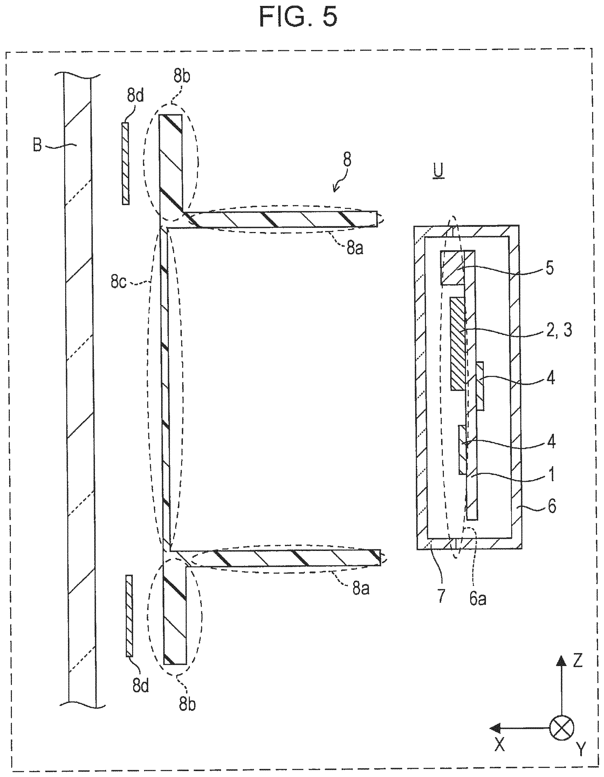

Fig. 4 and Fig. 5 are side cross-sectional diagrams that illustrate one example of a configuration of an antenna device U according to this embodiment. Note that Fig. 4 illustrates a state where the antenna device U is attached to the cover member B of the vehicle C, and Fig. 5 is an exploded diagram in which the antenna device U is not yet attached to the cover member B of the vehicle C.

The solid line arrows F in Fig. 4 indicate electromagnetic waves transmitted by a transmit antenna 2. Further, dotted line arrows Fr indicate reflected waves from a target.

The antenna device U according to this embodiment is applied to a radar device similarly to the antenna device 100 according to the related art, is disposed in the cover member B of the vehicle C (here, a bumper member B), and performs transmission and reception of electromagnetic waves via the cover member B, for example (see Fig. 1).

The antenna device U according to this embodiment includes a circuit board 1, the transmit antenna 2, a receive antenna 3, a signal processing IC 4, a connector 5, a housing 6, a radome 7, and a bracket 8.

In the antenna device U according to this embodiment, while a similar configuration to the antenna device 100 according to the related art is applied to a main body (here, the circuit board 1, the transmit antenna 2, the receive antenna 3, the signal processing IC 4, the connector 5, the housing 6, and the radome 7), the antenna device U performs transmission and reception of electromagnetic waves via an adjustment unit 8c of the bracket 8 that is provided so as to closely contact with the cover member B along an inner surface shape of the cover member B and thereby improves the transmittance for the electromagnetic waves in the cover member B (details will be described later).

The circuit board 1 is a board on which the transmit antenna 2, the receive antenna 3, the signal processing IC 4, the connector 5, and so forth are mounted. On a board surface on the surface side or the back side of the circuit board 1, the transmit antenna 2, the receive antenna 3, the signal processing IC 4, the connector 5, and so forth are mounted, and a pattern of wiring (not illustrated) that electrically connects the mounted components (the transmit antenna 2, the receive antenna 3, the signal processing IC 4, the connector 5, and so forth) with one another is formed.

Although not limited in the present disclosure, as a material of the circuit board 1, a printed circuit board (PCB) may be used, for example. As the circuit board 1, a multi-layer board or a semiconductor board in which the signal processing IC 4 is built may be used. Note that the circuit board 1 has a flat plate shape, for example.

The transmit antenna 2 and the receive antenna 3 are antenna units that are configured with conductor patterns formed in a board of the circuit board 1. The transmit antenna 2 is configured to transmit electromagnetic waves in the front direction of the antenna device U (positive X direction). Further, the receive antenna 3 is configured to receive electromagnetic waves from the front direction of the antenna device U (positive X direction).

As the transmit antenna 2 and the receive antenna 3 according to this embodiment, patch antennas that transmit and receive electromagnetic waves in the normal direction of the board surface of the circuit board 1 are used similarly to the antenna device 100 according to the related art. The circuit board 1 is disposed while the board surface on which the transmit antenna 2 and the receive antenna 3 are disposed is directed toward an inner surface side of the cover member B such that directions of directivity of the transmit antenna 2 and the receive antenna 3 are directed in the front direction of the antenna device U (that is, toward the inner surface side of the cover member B).

Each of the transmit antenna 2 and the receive antenna 3 includes plural antenna elements that are formed on the board surface of the circuit board 1 (in Fig. 5, the transmit antenna 2 includes four patch antennas disposed along the Y direction, and the receive antenna 3 includes four patch antennas disposed along the Y direction).

Electromagnetic waves transmitted by the transmit antenna 2 (hereinafter, also referred to as "transmission waves") sequentially pass through the radome 7, the adjustment unit 8c of the bracket 8, and the cover member B and are sent out in the front direction on the outside of the cover member B (here, a substantially horizontal direction). Further, reflected waves as the electromagnetic waves that are transmitted by the transmit antenna 2, are reflected by the target on the outside of the device, return sequentially passing through the cover member B, the adjustment unit 8c of the bracket 8, and the radome 7, and are incident on the receive antenna 3.

The signal processing IC 4 (which corresponds to a signal processor of the present disclosure) sends out driving signals of high frequency waves (for example, a millimeter wave frequency band) to the transmit antenna 2 and causes the transmit antenna 2 to transmit electromagnetic waves (for example, electromagnetic waves of a pulse compression type that are configured with pulse sequences, electromagnetic waves of continuous waves whose frequencies are modulated, or the like).

Further, the signal processing IC 4 receives reflected wave signals from the receive antenna 3, conducts an object detection process (for example, a wave detection process or a frequency analysis process) for the reflected wave signals, and thereby detects the distance to the target (for example, a vehicle or a person), the azimuth in which the target is present, and the reflection intensity, velocity, and so forth of the target as well.

Note that the signal processing IC 4 estimates the azimuth of the target by a scheme of scanning the transmission directions of the electromagnetic waves transmitted from the transmit antenna 2 or of detecting reception phase differences among the reflected wave signals that are respectively received by radiating elements of the receive antenna 3 which are arranged in an array, for example.

A process performed by the signal processing IC 4 is similar to a known configuration, and a detailed description will thus not be made here. The signal processing IC 4 is configured with a known microcomputer formed with a CPU, a ROM, a RAM, and so forth as a principal component, for example, and, in addition to those, includes a drive circuit that generates the driving signals of high frequency waves to be sent out to the transmit antenna 2, a wave detection circuit that performs a reception process of the reflected wave signals from the receive antenna 3, and so forth. However, it is matter of course that a portion of the signal processing IC 4 may be realized with a dedicated hardware circuit that does not have a CPU or the like. Further, a portion of the process of the signal processing IC 4 may be executed by an external apparatus such as a vehicle ECU (not illustrated).

Note that the signal processing IC 4 may be configured to be integrally mounted in the board surface of the circuit board 1 with the transmit antenna 2 or the receive antenna 3.

The connector 5 connects the signal processing IC 4 with an external apparatus (for example, the vehicle ECU installed in the vehicle C) such that the signal processing IC 4 and the external apparatus are capable of communication.

The housing 6 houses the circuit board 1 and supports the radome 7 in front of the circuit board 1. The housing 6 and the radome 7 are combined together, and the circuit board 1 is thereby housed in an internal portion of the housing 6 and the radome 7 in a substantially sealed state, for example.

An opening 6a through which the transmit antenna 2 and the receive antenna 3 perform transmission and reception of electromagnetic waves is formed in a front surface of the housing 6, and the radome 7 is placed on the opening 6a.

As a material of the housing 6, a metal member (for example, an aluminum material) is used in view of hindering the reflected waves from the cover member B from entering the housing 6, in view of improving heat dissipation characteristics from the circuit board 1, in view of EMC performance, and so forth, for example. However, as a material of the housing 6, resin may be used in a case where importance is placed on cost or weight saving, and the housing 6 and the radome 7 may be integrally formed of the same resin material.

The radome 7 is supported by the opening 6a of the housing 6 and functions as a protection member for the transmit antenna 2 and the receive antenna 3. A material that configures the radome 7 may be any material as long as that is a material with proper transmittance for electromagnetic waves. For example, acrylic resin, tetrafluoroethylene resin, polystyrene resin, polycarbonate resin, polybutylene terephthalate resin, polyphenylene resin, polypropylene resin, syndiotactic polystyrene resin, ABS resin, or the like is used.

The bracket 8 retains the housing 6 on an outside surface of the housing 6 and fixes the housing 6 to the cover member B in a front region of the housing 6. In other words, the bracket 8 enables transmission and reception of electromagnetic waves in desired directions while securing mechanical stability of the antenna device U.

[Configuration of Bracket]

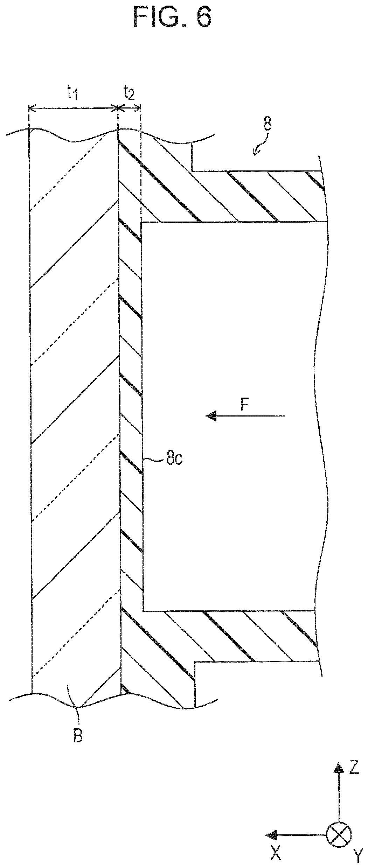

Next, details of a configuration of the bracket 8 according to this embodiment will be described with reference to Fig. 5 and Fig. 6.

Fig. 6 is a side cross-sectional diagram in which the adjustment unit 8c of the bracket 8 is enlarged.

The bracket 8 has a retaining unit 8a that retains the housing 6, a fixing unit 8b that is fixed to the cover member B in the front region of the housing 6, and the adjustment unit 8c that is disposed so as to closely contact with an inner surface of the cover member B in the front region of the housing 6, for example.

The retaining unit 8a is a part that retains the housing 6. The retaining unit 8a exhibits a tubular shape that has an accommodation space along an outer shape of the housing 6 and retains the housing 6 so as to surround the outside surface of the housing 6, for example.

The retaining unit 8a retains the housing 6 such that the directions in which the antenna device U transmits and receives electromagnetic waves become horizontal to the ground, for example. Accordingly, it becomes possible to perform object detection of a target that is present around the vehicle C.

Meanwhile, the retaining unit 8a is configured to retain the housing 6 such that the extending direction of the board surface of the circuit board 1 is inclined at three degrees or more, for example, with respect to the extending direction of the inner surface of the cover member B. Accordingly, reflected waves that are reflected by the cover member B may be inhibited from multiply reflecting between the cover member B and the board surface of the circuit board 1 and from arriving at the receive antenna 3.

The fixing unit 8b is a part that is fixed to the cover member B by a fixing member such as double-sided tape or bolts. The fixing unit 8b according to this embodiment is fixed to the cover member B by a fixing device 8d such as a double-sided tape. Note that Fig. 5 illustrates a configuration in which double-sided tape 8d is disposed in the region of the fixing unit 8b. However, the double-sided tape 8d may be disposed to extend to the region of the adjustment unit 8c.

Any scheme for fixing the fixing unit 8b to the cover member B may be used. As the fixing device 8d, ultrasonic welding or the like may be used as well as double-sided tape or bolts.

The fixing unit 8b is disposed so as to surround a periphery of the adjustment unit 8c on the inner surface of the cover member B, for example.

The adjustment unit 8c is provided to adjust pass characteristics of electromagnetic waves in the cover member B and functions to inhibit reflection of electromagnetic waves by the cover member B, for example.

The adjustment unit 8c is a sheet-shaped or plate-shaped part along the shape of the inner surface (which represents a surface on the opening 6a side, and the same applies hereinafter) of the cover member B and is disposed so as to cover a front region of the opening 6a of the housing 6 and closely contact with the inner surface of the cover member B. That is, in a case where the inner surface shape of the cover member B is a curved shape, the adjustment unit 8c is formed into a curved shape along the inner surface shape of the cover member B. In a case where the inner surface shape of the cover member B is a flat plate shape, the adjustment unit 8c is formed into a flat plate shape along the inner surface shape of the cover member B. The shape of the adjustment unit 8c is set based on design data of the vehicle C in which the antenna device U is installed, for example.

A surface of the adjustment unit 8c on the opening 6a side is in a flat shape in the whole region so that reflection or scattering of transmission waves is less likely to occur, for example. Further, a back surface of the adjustment unit 8c on the cover member B side is in a flat shape, for example, along the inner surface shape of the cover member B so that the whole region may closely contact with the inner surface of the cover member B. In other words, the back surface of the adjustment unit 8c on the cover member B side is in a shape in which a gap is not formed between the back surface and the inner surface of the cover member B throughout the whole region.

A region in which the adjustment unit 8c covers the inner surface of the cover member B is the region in an inner surface region of the cover member B, in which the region of the opening 6a of the housing 6 is projected onto the inner surface of the cover member B (that is, the YZ plane of the cover member B), or a wider region than the region that corresponds to the projection.

As a material that configures the adjustment unit 8c, although any material may be used as long as that is a material with high transmittance for electromagnetic waves, a resin material such as epoxy resin may be used, for example. However, as the material, it is desirable to use a material with a close dielectric constant to the cover member B in view of avoiding occurrence of reflection on a boundary surface with the cover member B when electromagnetic waves pass through the adjustment unit 8c. However, adhesive tape or the like may be disposed between the adjustment unit 8c and the cover member B in view of improving contact closeness.

Note that the bracket 8 is integrally molded with resin to have the retaining unit 8a, the fixing unit 8b, and the adjustment unit 8c, for example.

The thickness (which represents the thickness in the X direction, and the same applies hereinafter) of the adjustment unit 8c is set to be substantially the same along the direction in which the inner surface of the cover member B extends, for example. Note that the thickness of the adjustment unit 8c is desirably set thinner than the thickness of the fixing unit 8b but may be thicker than the thickness of the fixing unit 8b.

However, in consideration of the thickness and relative dielectric constant of the cover member B, the thickness and relative dielectric constant of the adjustment unit 8c are set such that the reflectance of electromagnetic waves becomes lower in a case where electromagnetic waves pass through an integral member of the cover member B and the adjustment unit 8c than in a case where electromagnetic waves pass through the cover member B alone.

Here, a description will be made about setting of the thickness and relative dielectric constant of the adjustment unit 8c.

A reflection phenomenon of an electromagnetic wave in the cover member B is mostly due to a reflection phenomenon on a boundary surface between the cover member B and the atmosphere (here, the inner surface and outer surface of the cover member B). Thus, it is known that the reflection phenomenon of an electromagnetic wave in the cover member B is inhibited in a case where the traveling distance of an electromagnetic wave that passes from the inner surface to the outer surface of the cover member B is an integral multiple of the half wavelength of the electromagnetic wave. That is, the reflectance of an electromagnetic wave in the cover member B is lowered in a case where the condition of the following formula (1) is satisfied.

$$t_1 = \lambda_g/2 \times n \quad \text{... (1)}$$

(Here, $t_1$: the thickness of the cover member B, n: an arbitrary positive integer, and $\lambda_g$: the effective wavelength of an electromagnetic wave transmitted by the transmit antenna 2)

Here, the effective wavelength $\lambda_g$ of the electromagnetic wave that passes through the cover member B is $\lambda_g = \lambda_0/\text{sqrt}(\varepsilon_{r1})$ in a case where the free-space wavelength of the electromagnetic wave transmitted by the transmit antenna 2 is set as $\lambda_0$ and the relative dielectric constant of the cover member B is set as $\varepsilon_{r1}$. Accordingly, the formula (1) may be expressed as a formula (2).

$$t_1 \times \sqrt{\varepsilon_{r1}} = \lambda_0/2 \times n \quad \text{... (2)}$$

(Here, $t_1$: the thickness of the cover member B, $\varepsilon_{r1}$: the relative dielectric constant of the cover member B, n: an arbitrary positive integer, and $\lambda_0$: the free-space wavelength of the electromagnetic wave transmitted by the transmit antenna 2)

However, the thickness and relative dielectric constant of the cover member B are different with respect to each vehicle model in which the antenna device U is installed. Thus, it may actually be difficult to adjust the wavelength of the electromagnetic wave transmitted by the transmit antenna 2 such that the condition of the above formula (2) is satisfied.

In such view, in the antenna device U according to this embodiment, the adjustment unit 8c is provided to the bracket 8 so as to virtually satisfy the condition of the formula (2).

As described above, the adjustment unit 8c is disposed so as to closely contact with the inner surface of the cover member B. Consequently, a configuration is made such that a boundary surface through which electromagnetic waves pass is substantially less likely to be formed between the cover member B and the adjustment unit 8c.

Accordingly, the reflection phenomenon of an electromagnetic wave in the cover member B may be considered as a reflection phenomenon in an integral member of the cover member B and the adjustment unit 8c. Consequently, the reflectance of the integral member of the cover member B and the adjustment unit 8c is lowered in a case where the condition of the following formula (3) is satisfied. Note that similarly to the above, the condition of the formula (3) is the condition that the traveling distance of an electromagnetic wave that passes from the surface of the adjustment unit 8c on the opening 6a side to the outer surface of the cover member B effectively becomes $\lambda_0/2 \times n$ (n is an arbitrary positive integer, and $\lambda_0$ is the free-space wavelength of the electromagnetic wave).

$$t_1 \times \sqrt{\varepsilon_{r1}} + t_2 \times \sqrt{\varepsilon_{r2}} = \lambda_0/2 \times n \quad \text{... (3)}$$

(Here, $t_1$: the thickness of the cover member B, $\varepsilon_{r1}$: the relative dielectric constant of the cover member B, $t_2$: the thickness of the adjustment unit 8c, $\varepsilon_{r2}$: the relative dielectric constant of the adjustment unit 8c, n: an arbitrary positive integer, and $\lambda_0$: the free-space wavelength of the electromagnetic wave transmitted by the transmit antenna 2)

In such a manner, the thickness and relative dielectric constant of the adjustment unit 8c according to this embodiment are set such that the condition of the above formula (3) is satisfied in order to reduce the reflectance of the integral member of the cover member B and the adjustment unit 8c.

[Radar Performance of Antenna Device]

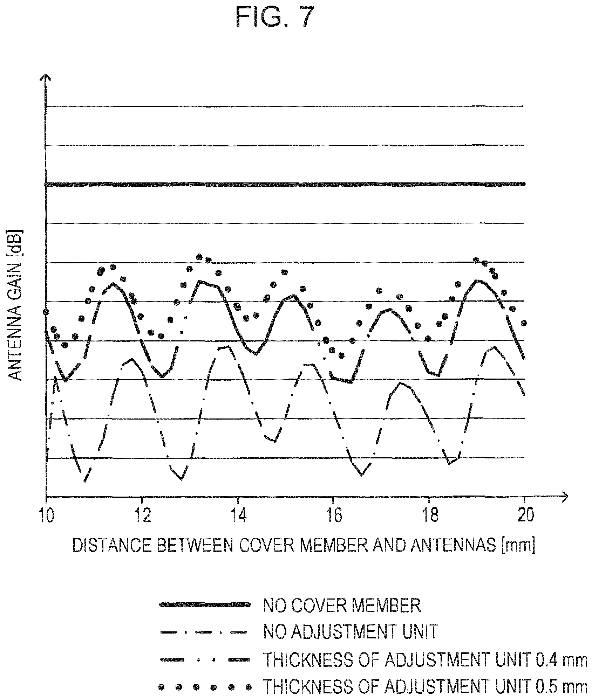

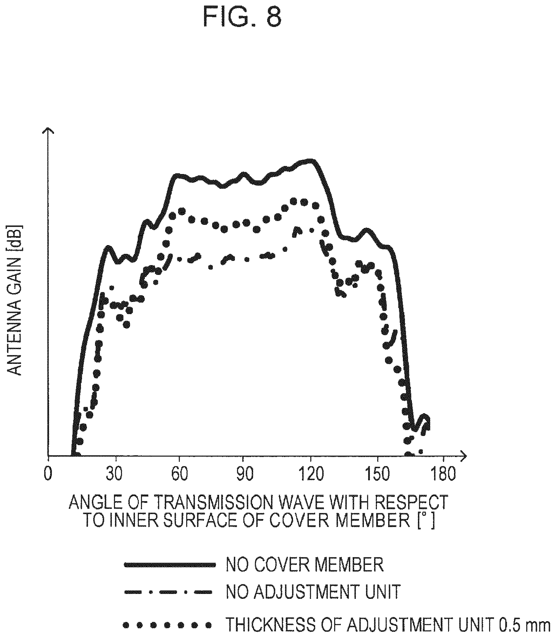

Radar performance of the antenna device U according to this embodiment will next be described with reference to Fig. 7 and Fig. 8.

Fig. 7 is a diagram that illustrates results of a simulation for examining the radar performance of the antenna device U according to this embodiment.

In this simulation, in the antenna device U, the distance between the cover member B and the transmit antenna 2 (and the receive antenna 3) was changed, and the radio field intensity (that is, the antenna gain) of a reflected wave from a prescribed target, which was received by the receive antenna 3, was thereby calculated with respect to each of the distances.

The curves in Fig. 7 respectively represent simulation results under the following conditions:

Bold line curve: a mode in which the cover member B is not present in a front region of the antenna device U
One-dot-chain line curve: a mode in which the adjustment unit 8c is not provided to the bracket 8
Two-dot-chain line curve: a mode in which the thickness of the adjustment unit 8c of the bracket 8 is set to 0.4 mm
Dotted line curve: a mode in which the thickness of the adjustment unit 8c of the bracket 8 is set to 0.5 mm

Note that in Fig. 7, the condition of the above formula (3) is satisfied in the case where the thickness of the adjustment unit 8c of the bracket 8 is 0.5 mm (dotted line curve).

The vertical axis of the graph of Fig. 7 represents the radio field intensity [dB] of the reflected wave from the prescribed target, which is received by the receive antenna 3, and the horizontal axis of the graph represents the distance [mm] between the cover member B and the transmit antenna 2 (and the receive antenna 3).

Fig. 8 is a diagram that illustrates results of another simulation for examining the radar performance of the antenna device U according to this embodiment.

In this simulation, differently from the simulation in Fig. 7, in the antenna device U, the angle of a transmission wave with respect to the inner surface of the cover member B was changed, and the radio field intensity (that is, the antenna gain) of the reflected wave from a prescribed target, which was received by the receive antenna 3, was thereby calculated with respect to each of the angles.

The curves in Fig. 8 respectively represent simulation results under the following conditions:

Bold line curve: the mode in which the cover member B is not present in the front region of the antenna device U
One-dot-chain line curve: the mode in which the adjustment unit 8c is not provided to the bracket 8
Dotted line curve: the mode in which the thickness of the adjustment unit 8c of the bracket 8 is set to 0.5 mm

The vertical axis of the graph of Fig. 8 represents the radio field intensity [dB] of the reflected wave from the prescribed target, which is received by the receive antenna 3, and the horizontal axis of the graph represents the angle [°] of the transmission wave with respect to the inner surface of the cover member B.

As it is understood from Fig. 7 and Fig. 8, in the antenna device U, it becomes possible to secure a high gain by providing the adjustment unit 8c compared to a case where the adjustment unit 8c is not provided. Then, it becomes possible to secure a higher gain by setting the thickness of the adjustment unit 8c so as to satisfy the condition of the above formula (3).

Note that in the curves in Fig. 7 and Fig. 8, a reason why regions appear in which the radio field intensity becomes weak (for example, the positions in which the distances between the cover member and the antenna are 10.5 mm, 12.5 mm, 14.5 mm, 16.5 mm, and 18.5 mm) is because reflected waves Fa from the cover member B interfere with the reflected wave from the target in spots due to slight differences in the distance (or differences in the angle) between the cover member B and the transmit antenna 2.

Such an interference between the reflected waves Fa from the cover member B and the reflected wave from the target degrades detection precision of the target in spots and is desirably inhibited by averting the directions in which the reflected waves Fa from the cover member B travel from the receive antenna 3 side as in the antenna device U according to a second embodiment, for example (described later in the second embodiment).

[Effects]

As described above, in the antenna device U according to this embodiment, the bracket 8 that retains the housing 6 and fixes the housing 6 to the cover member B in front of the opening 6a of the housing 6 is disposed so as to cover a region in front of the opening 6a of the housing 6 and to closely contact with the inner surface of the cover member B and has the sheet-shaped or plate-shaped adjustment unit 8c that adjusts the pass characteristics of an electromagnetic wave in the cover member B.

Consequently, the antenna device U according to this embodiment may inhibit reflection of an electromagnetic wave by the cover member B in transmission and reception of the electromagnetic wave via the cover member B and may thereby inhibit degradation of reception characteristics of the receive antenna 3. In other words, the antenna device U according to this embodiment may inhibit reflection of the electromagnetic wave by the cover member B regardless of the shape of the cover member B and is thus capable of improving flexibility of the position for disposing the antenna device U.

The thickness and relative dielectric constant of the adjustment unit 8c according to this embodiment are set such that the traveling distance of the electromagnetic wave that passes from an end surface of the adjustment unit 8c to an end surface of the cover member B effectively becomes $\lambda_0/2 \times n$ (here, n represents an arbitrary positive integer, and $\lambda_0$ represents the free-space wavelength of the electromagnetic wave). Accordingly, reflection of electromagnetic waves by the cover member B may further be inhibited.

(Modification Example 1 of First Embodiment)

In the antenna device U according to the above embodiment, the cover member B or the adjustment unit 8c may be configured with a laminated body.

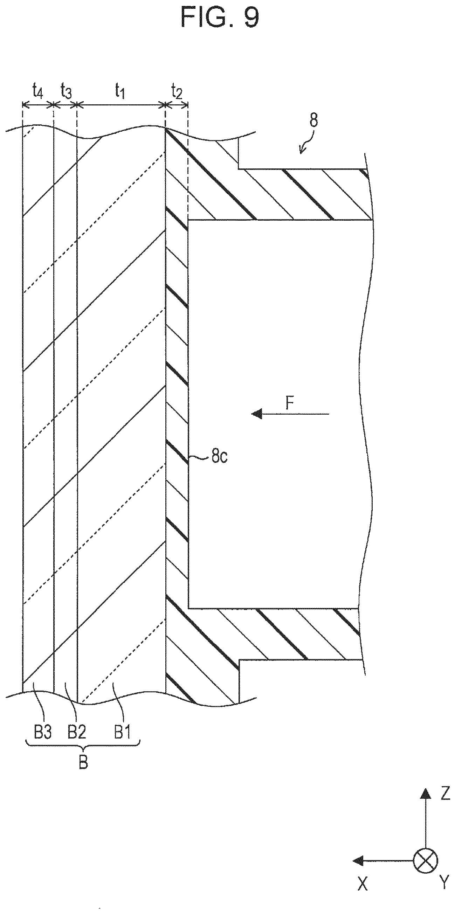

Fig. 9 is a diagram that illustrates one example of a mode in which the cover member B is configured with a laminated body. Note that Fig. 9 is a side cross-sectional diagram in which the adjustment unit 8c of the bracket 8 is enlarged.

Fig. 9 illustrates a mode in which the cover member B is configured with a laminated body which is formed with a first layer B1 with a thickness $t_1$ and a relative dielectric constant $\varepsilon_{r1}$, a second layer B2 with a thickness $t_3$ and a relative dielectric constant $\varepsilon_{r3}$, and a third layer B3 with a thickness $t_4$ and a relative dielectric constant $\varepsilon_{r4}$. The mode corresponds to a case where a coating film or the like is formed on a surface of the cover member B, for example.

In such a mode, the reflectance of the integral member of the cover member B and the adjustment unit 8c changes in accordance with the respective thicknesses and relative dielectric constants of the first layer to the third layer of the cover member B. A condition for lowering the reflectance is specifically a case where the following formula (4) is satisfied. Note that, similarly to the condition of the formula (3), the condition of the formula (4) is the condition that the traveling distance of an electromagnetic wave that passes from the end surface of the adjustment unit 8c to the end surface of the cover member B effectively becomes $\lambda_0/2 \times n$ (n is an arbitrary positive integer, and $\lambda_0$ is the free-space wavelength of the electromagnetic wave).

$$t_1 \times \sqrt{\varepsilon_{r1}} + t_2 \times \sqrt{\varepsilon_{r2}} + t_3 \times \sqrt{\varepsilon_{r3}} + t_4 \times \sqrt{\varepsilon_{r4}} = \lambda_0/2 \times n \qquad \dots (4)$$

(Here, $t_1$: the thickness of the cover member B (first layer), $\varepsilon_{r1}$: the relative dielectric constant of the cover member B (first layer), $t_3$: the thickness of the cover member B (second layer), $\varepsilon_{r3}$: the relative dielectric constant of the cover member B (second layer), $t_4$: the thickness of the cover member B (third layer), $\varepsilon_{r4}$: the relative dielectric constant of the cover member B (third layer), $t_2$: the thickness of the adjustment unit 8c, $\varepsilon_{r2}$: the relative dielectric constant of the adjustment unit 8c, n: an arbitrary positive integer, and $\lambda_0$: the free-space wavelength of the electromagnetic wave transmitted by the transmit antenna 2)

Consequently, in this modification example, the thickness and relative dielectric constant of the adjustment unit 8c are set such that the condition of the formula (4) is satisfied in consideration of the respective thicknesses and relative dielectric constants of the first layer to the third layer of the cover member B.

Meanwhile, also in a case where the adjustment unit 8c is configured with a laminated body, the respective thicknesses and relative dielectric constants of layers of the adjustment unit 8c may be set by a similar scheme to the above.

Note that expressing such a mode in a superordinate concept, a condition for lowering the reflectance of the integral member of the cover member B and the adjustment unit 8c may be expressed as the following formula (5). Consequently, the thickness and relative dielectric constant of the adjustment unit 8c may be set such that the condition of the following formula (5) is satisfied.

$$\sum_{i=1}^{k} t_i \times \sqrt{\varepsilon_{ri}} = \lambda_0/2 \times n \qquad \dots (5)$$

(Here, k: the total number of layers of the cover member B and the adjustment unit 8c, $t_i$: the thickness of the ith layer among the total k layers, $\varepsilon_{ri}$: the relative dielectric constant of the ith layer, n: an arbitrary positive integer, and $\lambda_0$: the free-space wavelength of the electromagnetic wave transmitted by the transmit antenna 2)

Note that in a case where the double-sided tape 8d or the like of the bracket 8 extends to the position of the adjustment unit 8c, the respective thicknesses and relative dielectric constants of the layers of the adjustment unit 8c may be set by a similar scheme to the above in consideration of the thickness and relative dielectric constant of the double-sided tape 8d.

As described above, the antenna device U according to this modification example may configure the adjustment unit 8c such that the reflectance of an electromagnetic wave in the cover member B is lowered even in a case where the cover member B (or the adjustment unit 8c) is configured with a laminated body.

(Modification Example 2 of First Embodiment)

As a material that configures the adjustment unit 8c of the bracket 8 according to the above embodiment, it is sufficient that the adjustment unit 8c is formed of a material with high transmittance for electromagnetic waves, and the retaining unit 8a and the fixing unit 8b may be formed of different materials from the adjustment unit 8c.

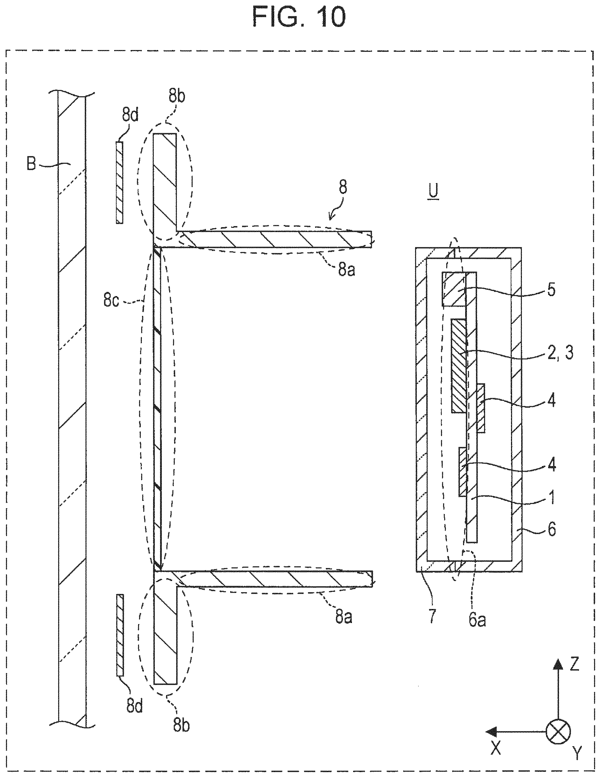

Fig. 10 is a side cross-sectional diagram of the bracket 8 according to this modification example.
In the bracket 8 according to this modification example, similarly to the above embodiment, the adjustment unit 8c is formed of a resin material (for example, epoxy resin) with high transmittance for electromagnetic waves, for example. Meanwhile, the retaining unit 8a and the fixing unit 8b are formed of a metal material (for example, an aluminum material) in view of inhibiting incidence of electromagnetic waves from an outside environment into the housing 6.
The bracket 8 according to this embodiment may be realized by molding the retaining unit 8a and the fixing unit 8b by dies or the like by using a metal material and thereafter attaching the adjustment unit 8c by using a resin material, for example.
In such a manner, the antenna device U according to this modification example may inhibit coupling loop interference waves from being incident into the housing 6, for example.

(Modification Example 3 of First Embodiment)

The retaining unit 8a of the bracket 8 according to the above embodiment may be configured to retain the housing 6 by another retaining mode.

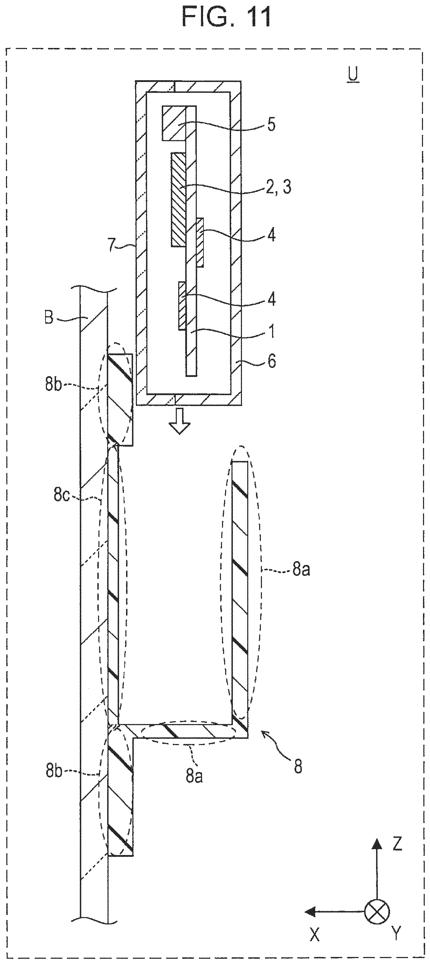

Fig. 11 is a side cross-sectional diagram of the bracket 8 according to this modification example. The bracket 8 is in a tubular shape, for example, similarly to Fig. 5. A retaining structure that supports the housing 6 also from the negative X direction is a snap-fit or fixed fitting structure, for example, and has a function to avoid spontaneous falling of the housing 6 after insertion of the housing 6 into the bracket 8.
The retaining unit 8a according to this modification example has a retaining structure that may support the housing 6 also from the negative X direction. Note that the retaining unit 8a according to this modification example has an opening on an upper side, and the housing 6 is retained by the retaining unit 8a by being inserted through the opening of the retaining unit 8a.
In such a manner, the antenna device U according to this modification example is in view of mechanical stability of the housing 6.

(Modification Example 4 of First Embodiment)

The adjustment unit 8c according to the above embodiment may similarly be applied to a mode in which the thickness or relative dielectric constant of the cover member B is different with respect to each region in the YZ plane of the cover member B.
In such a mode, the thickness and relative dielectric constant of the adjustment unit 8c may be set so as to correspond to the thickness and relative dielectric constant in each region of the cover member B such that the condition of the above formula (3) is satisfied along the passing direction of an electromagnetic wave (X direction) and in each region in the YZ plane.

(Second Embodiment)

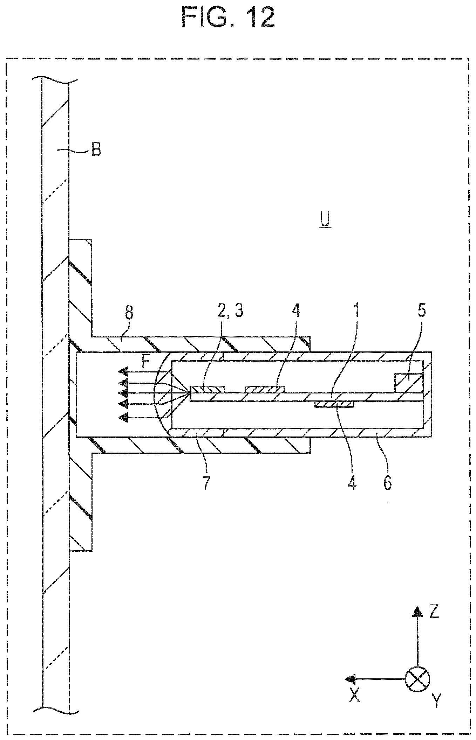

Next, one example of a configuration of the antenna device U according to the second embodiment will be described with reference to Fig. 12 to Fig. 14.
The antenna device U according to this embodiment is different from the antenna device U according to the first embodiment in that a configuration of a main body (here, the circuit board 1, the transmit antenna 2, the receive antenna 3, the housing 6, and the radome 7) is changed and arrival of the reflected waves from the cover member B to the receive antenna 3 is thereby reduced. Note that configurations in common with the first embodiment will not be described (in the following, the same applies to the other embodiments).

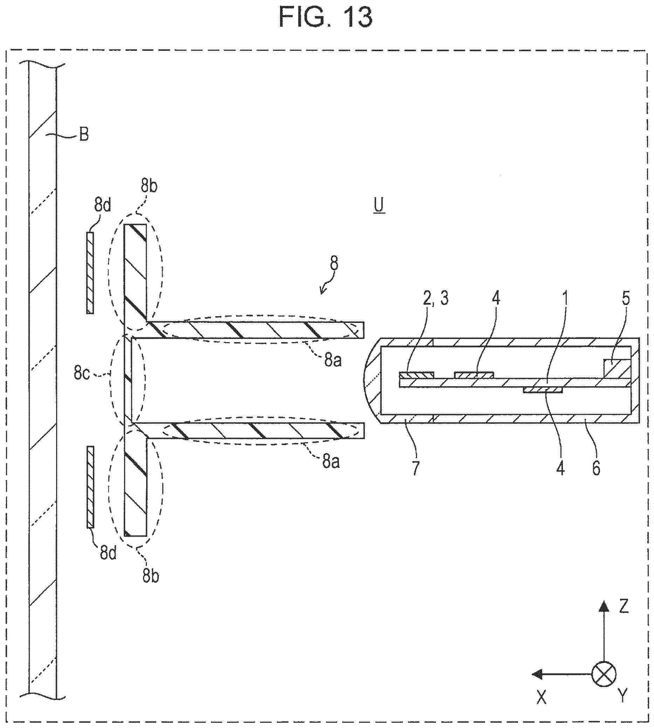

Fig. 12 and Fig. 13 are side cross-sectional diagrams that illustrate one example of a configuration of the antenna device U according to this embodiment. Note that Fig. 12 illustrates a state where the antenna device U is attached to the cover member B of the vehicle C, and Fig. 13 is an exploded diagram in which the antenna device U is not yet attached to the cover member B of the vehicle C.

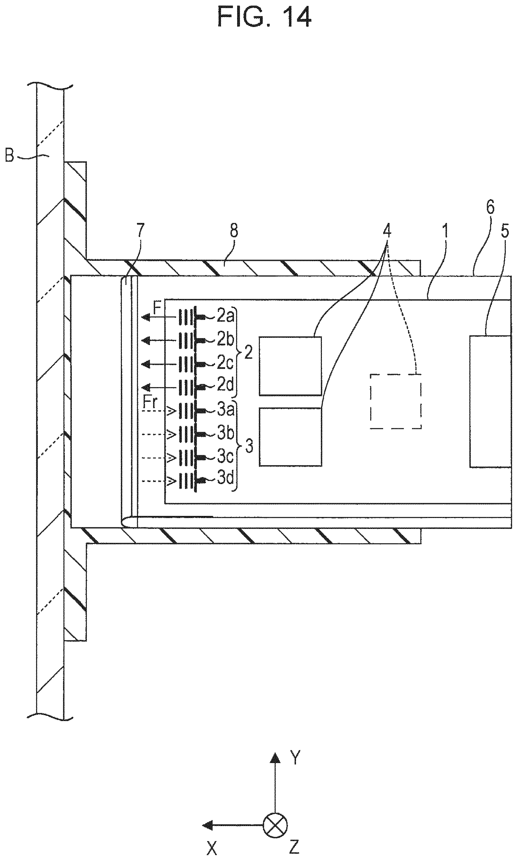

Fig. 14 is a diagram in which the antenna device U according to this embodiment is seen in a plan view. Note that Fig. 14 illustrates a state where a wall portion of the housing 6 on an upper surface side is removed.

The circuit board 1 according to this embodiment is disposed such that the extending direction of the board surface becomes parallel with the front-rear direction (that is, the transmission-reception direction of electromagnetic waves). In other words, the circuit board 1 is disposed such that the extending direction of the board surface intersects with the extending direction of the cover member B (here, a substantially Z-axis direction).

As the transmit antenna 2 and the receive antenna 3 according to this embodiment, end-fire array antennas are applied which have directional characteristics in a direction on a front end side of the circuit board 1, for example. Note that each of the transmit antenna 2 and the receive antenna 3 according to this embodiment is configured with plural antenna elements that are formed in the board surface (in Fig. 14, the transmit antenna 2 is configured with four end-fire array antennas disposed along the Y direction, and the receive antenna 3 is configured with four end-fire array antennas disposed along the Y direction).

The radome 7 according to this embodiment is formed so as to function as a dielectric lens (hereinafter, also referred to as "dielectric lens 7"). The dielectric lens 7 condenses beams of electromagnetic waves transmitted by the transmit antenna 2 and sends out the beams to a front region on the outside of the device. Then, the dielectric lens 7 concentrates reflected waves as the electromagnetic waves that return from a target and sends out the reflected waves to the receive antenna 3. In other words, each of the transmit antenna 2 and the receive antenna 3 is disposed in a position that becomes a focal point of the dielectric lens 7. Note that the dielectric lens 7 is more desirably configured to condense beams of electromagnetic waves to the extent that the electromagnetic waves transmitted by the transmit antenna 2 are converted into plane waves.

The dielectric lens 7 improves the gains in a case where the transmit antenna 2 and the receive antenna 3 transmit and receive electromagnetic waves and inhibits the reflected waves from the cover member B from being incident on the receive antenna 3.

As the dielectric lens 7, a one-side convex lens may be applied in which a front surface (positive X direction) is formed into a convex shape, for example. However, as the dielectric lens 7, a both-side convex lens, a ball lens, a Fresnel lens, a combination of those, a combination of a concave lens and those, or the like may be applied. Further, as the dielectric lens 7, a rear surface side may be formed into a convex shape in the negative X direction as well.

The shape of the dielectric lens 7 according to this embodiment is formed into a convex shape in the positive X direction so that beams of electromagnetic waves are not condensed in the Y direction (see Fig. 14). In other words, the cross-sectional shape of a side surface of the dielectric lens 7 is substantially the same shape (for example, a half-moon shape which is convex in the positive X direction) in any position in the Y direction. Accordingly, electromagnetic waves that are respectively transmitted by the plural antenna elements of the transmit antenna 2 disposed along the Y direction are directed in mutually different directions of directivity in arrival at the receive antenna 3 and are thereby hindered from leading to precision degradation of object detection (for example, precision degradation due to mutual interference or precision degradation due to changes in phase differences).

To the bracket 8 according to this embodiment, a configuration similar to the configuration described in the first embodiment may be applied.

However, the bracket 8 according to this embodiment is desirably configured to retain the housing 6 such that the direction in which electromagnetic waves are sent out from the dielectric lens 7 (that is, the positive X direction) is inclined at three degrees or more with respect to the normal direction of the inner surface of the cover member B in view of further reducing the ratio in which the reflected waves reflected by the cover member B arrive at the receive antenna 3.

[Behavior of Electromagnetic Waves When Antenna Device Is in Action]

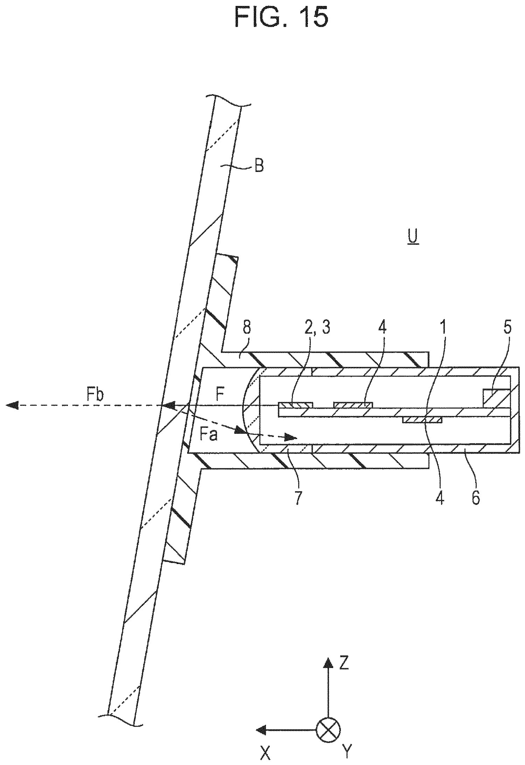

Next, a description will be made with reference to Fig. 15 about behavior of electromagnetic waves when the antenna device U is in action according to this embodiment and a reason why arrival of the reflected waves from the cover member B to the receive antenna 3 is reduced in the antenna device U according to this embodiment.

Fig. 15 is a diagram that illustrates behavior of electromagnetic waves in the antenna device U according to this embodiment. Note that for convenience of description, Fig. 15 illustrates a state where the direction in which electromagnetic waves are sent out from the dielectric lens 7 (that is, the positive X direction) is inclined at approximately three degrees with respect to the normal direction of the inner surface of the cover member B.

In Fig. 15, the solid line arrow F indicates electromagnetic waves transmitted by the antenna device U. The one-dot-chain line arrow Fa indicates reflected waves, which are reflected by the cover member B, of the electromagnetic waves transmitted by the transmit antenna 2. The dotted line arrow Fb indicates electromagnetic waves, which are transmitted through the cover member B, of the electromagnetic waves transmitted by the transmit antenna 2.

As described with reference to Fig. 3, a portion of the electromagnetic waves F transmitted from the transmit antenna 2 is reflected by the cover member B and becomes the reflected waves Fa that return to the antenna device U side.

However, the antenna device U according to this embodiment is different from the antenna device 100 according to the related art and performs transmission and reception of electromagnetic waves substantially in parallel with the board surface of the circuit board 1 by using the transmit antenna 2 and the receive antenna 3 that are disposed in a front portion region of the circuit board 1. Thus, the board surface of the circuit board 1 is disposed such that the extending direction of the board surface of the circuit board 1 intersects with the extending direction of the cover member B. That is, the board surface of the circuit board 1 is configured not to be directly opposed to the inner surface of the cover member B.

Consequently, the most part of the reflected waves Fa from the cover member B is not incident into the housing 6 and is dispersed while being averted above and below the housing 6. Further, the reflected waves Fa that hit the housing 6 are not again reflected to the cover member B side but are dispersed while being averted in a rear direction of the housing 6.

In addition, in the antenna device U according to this embodiment, the transmit antenna 2 and the receive antenna 3 on the circuit board 1 perform transmission and reception of electromagnetic waves via the dielectric lens 7.

Consequently, the reflected waves Fa, which arrive at the dielectric lens 7, of the reflected wave Fa from the cover member B are incident on a non-planar portion of the dielectric lens 7 and are dispersed without being concentrated on the receive antenna 3. That is, even in a case where the reflected waves Fa that arrive at the dielectric lens 7 are transmitted through the dielectric lens 7, the reflected waves Fa that arrive at angles other than prescribed angles are not concentrated on the position of the receive antenna 3 and are thus dispersed in the housing 6 or dispersed while breaking up to the outside of the housing 6. Further, in a case where the reflected waves Fa are reflected by the dielectric lens 7, the reflection angles of the reflected waves Fa change by the angles of a surface of the dielectric lens 7 (for example, in a case of a lens in a convex shape, the reflection angles change in directions that separate from the antenna device) and are thus dispersed without leading to multiple reflections.

In such a manner, in the antenna device U according to this embodiment, the reflected waves Fa from the cover member B are dispersed without being multiply reflected between the cover member B and the circuit board 1 (and the housing 6). Further, similarly, the antenna device U according to this embodiment inhibits the reflected waves Fa from arriving at the position of the receive antenna 3 due to coupling loop interference of the reflected waves Fa from the cover member B. Meanwhile, reflected waves from an object are not hampered by the above configuration but arrive at the position of the receive antenna 3 while traveling along the same path as the transmitted electromagnetic waves.

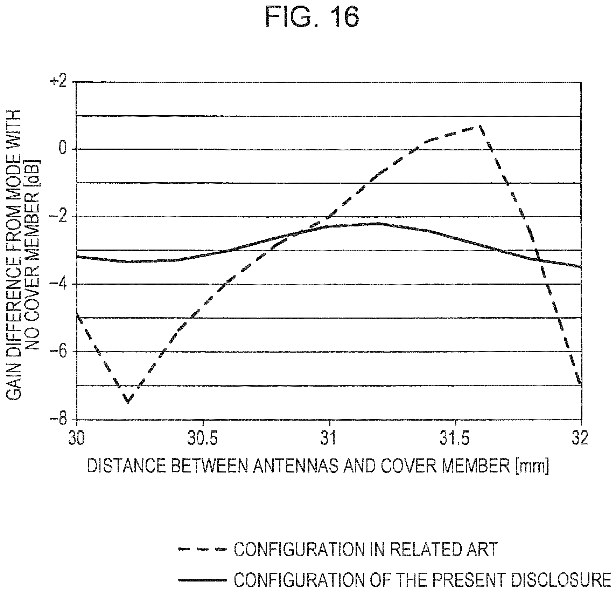

Fig. 16 is a diagram that illustrates results of a simulation for examining the radar performance of the antenna device U according to this embodiment.

In this simulation, in the antenna device U, with respect to each distance between the cover member B and the transmit antenna 2 (and the receive antenna 3), the radio field intensity (that is, the gain) of a reflected wave from a prescribed target, which was received by the receive antenna 3, was calculated.

In Fig. 16, a simulation result of the antenna device U (see Fig. 12) according to this embodiment is represented by the solid line curve, and a simulation result of the antenna device 100 (see Fig. 2) according to the related art is represented by the dotted line curve.

The vertical axis of the graph of Fig. 16 represents the radio field intensity of the reflected wave from the prescribed target, which is received by the receive antenna 3 (here, in comparison with the radio field intensity in a case where the cover member B is not interposed), and the horizontal axis of the graph represents the distance between the cover member B and the transmit antenna 2 (and the receive antenna 3).

As it is understood from Fig. 16, in the antenna device 100 according to the related art, regions in which the radio field intensity becomes weak (in Fig. 16, a position of 30.25 mm and a position of 32.0 mm) appear in plural positions in accordance with the distance between the cover member B and the transmit antenna 102. That is, in the antenna device 100 according to the related art, regions are present in which the reflected waves Fa from the cover member B interfere with the reflected wave from the target and detection precision is degraded in spots due to slight differences in the distance (or differences in the angle) between the cover member B and the transmit antenna 102. Note that such a phenomenon is as described above with reference to Fig. 7 and Fig. 8.

In this point, in the antenna device U according to this embodiment, a region is not present in which the radio field intensity becomes weak depending on the distance between the cover member B and the transmit antenna 2. That is, because the antenna device U according to this embodiment may inhibit a situation in which the reflected waves Fa from the cover member B interfere with the reflected wave from the target, substantially uniform detection precision may be obtained regardless of the positional relationship between the cover member B and the transmit antenna 2. Such a result indicates that the radar performance related to azimuth estimation about the position in which the target is present is improved in the antenna device U according to this embodiment.

As described above, the antenna device U according to this embodiment performs transmission and reception of electromagnetic waves substantially in parallel with the board surface of the circuit board 1 by using the transmit antenna 2 and the receive antenna 3 that are disposed in the front portion region of the circuit board 1 and performs transmission and reception of electromagnetic waves with the outside of the device via the dielectric lens 7.

Accordingly, a situation may be inhibited in which the reflected waves from the cover member B are multiply reflected between the cover member B and the antenna device U (for example, the circuit board 1, the housing 6, or the like) and a portion of the reflected waves arrives at the receive antenna 3. Further, a situation may be inhibited in which the output gain lowers due to mutual phase cancellation by multiple reflections between the antenna device U and the cover (bumper) member. Accordingly, for example, it becomes possible to uniformly secure the gain in each azimuth for the antenna device U and to improve precision of azimuth estimation.

(Third Embodiment)

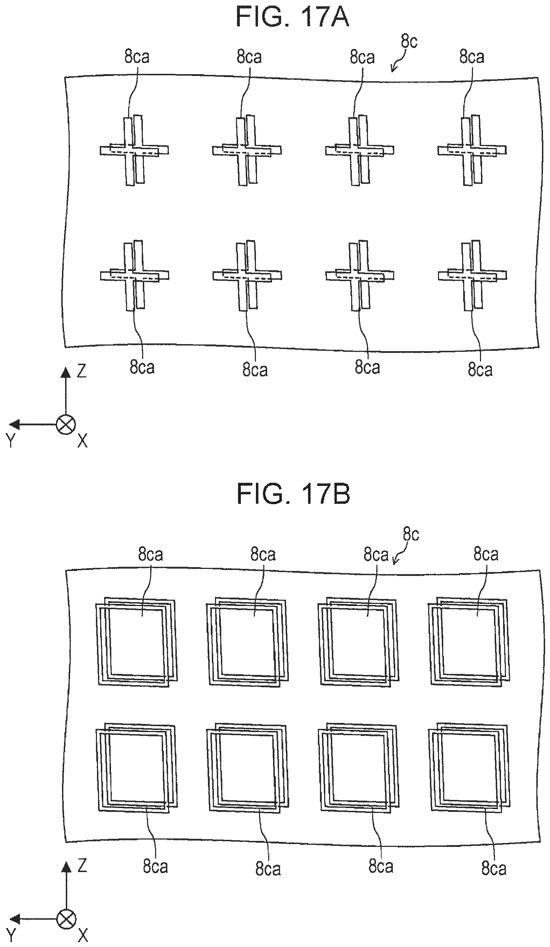

Next, the antenna device U according to a third embodiment will be described with reference to Fig. 17A and Fig. 17B.

The antenna device U according to this embodiment is different from the first embodiment in that the adjustment unit 8c has a frequency selective structure (frequency selective surface (FSS)).

Fig. 17A is a diagram that illustrates one example of the frequency selective structure provided to the adjustment unit 8c according to this embodiment. Further, Fig. 17B is a diagram that illustrates another example of the frequency selective structure provided to the adjustment unit 8c according to this embodiment. Note that Fig. 17A and Fig. 17B are diagrams in which a surface of the adjustment unit 8c is seen from the negative X direction.

The frequency selective structure is known as a structure in which electric conductor patterns which correspond to a specific frequency (also referred to as resonant elements) are regularly provided on both sides or one side of resin, the electric conductor patterns are thereby caused to resonate with an electromagnetic wave, and passage of the frequency is facilitated. In the frequency selective structure, for example, the size of one element is set to around $\lambda/4$, and the frequency selective structure acts as a metamaterial that exhibits a negative dielectric constant at the frequency which corresponds to $\lambda$.

In the frequency selective structure according to this embodiment, the known frequency selective structure is applied to the adjustment unit 8c. The frequency selective structure according to this embodiment is configured such that plural electric conductor patterns 8ca that resonate with an electromagnetic wave to be transmitted and received are regularly disposed along the extending direction of the cover member B (that is, in the YZ plane) on the surface of the adjustment unit 8c. Note that as a shape of the electric conductor pattern 8ca, any known shape may be applied other than the shapes illustrated in Fig. 17A and Fig. 17B.

Note that the electric conductor pattern 8ca that configures the frequency selective structure is formed on the surface of the adjustment unit 8c by using metal plating or the like, for example.

As described above, in the antenna device U according to this embodiment, the frequency selective structure is provided to the adjustment unit 8c, and it is thereby possible to decrease the degree of arrival of an electromagnetic wave from an outside space at the receive antenna 3. Accordingly, the reception characteristics of the receive antenna 3 may be improved.

(Fourth Embodiment)

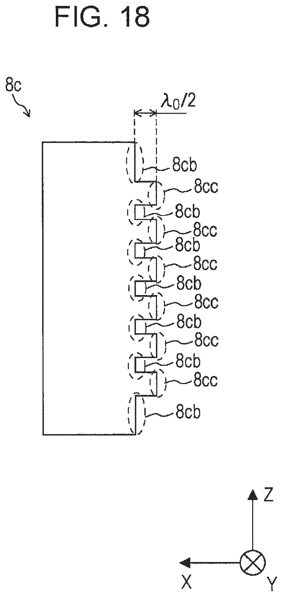

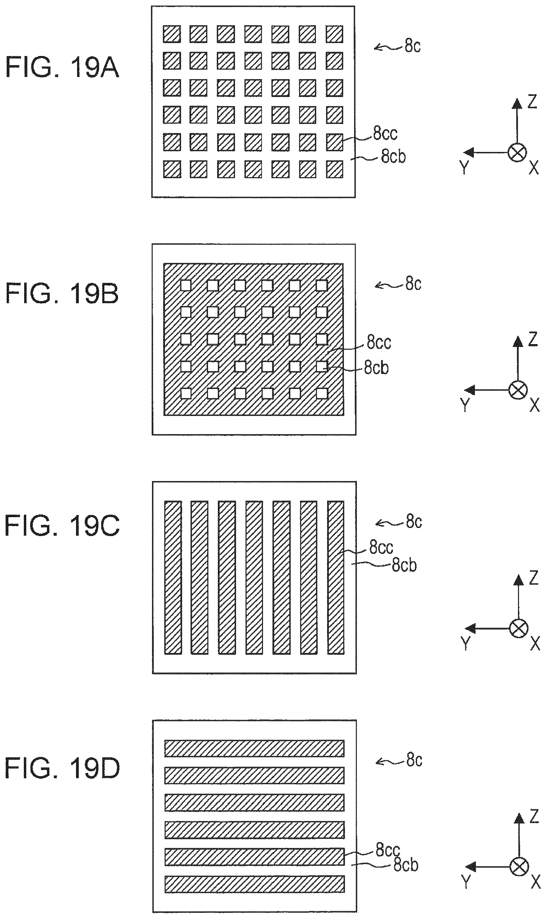

Next, the antenna device U according to a fourth embodiment will be described with reference to Fig. 18 and Fig. 19A to Fig. 19D.

The antenna device U according to this embodiment is different from the first embodiment in that an uneven structure is provided to the surface of the adjustment unit 8c on the opening 6a side.

Fig. 18 is a diagram that illustrates one example of the uneven structure provided to the adjustment unit 8c according to this embodiment. Fig. 18 is a side cross-sectional diagram in which the uneven structure of the adjustment unit 8c is seen from the negative Y direction.

Fig. 19A is a plan diagram of the uneven structure provided to the adjustment unit 8c according to this embodiment. Further, each of Fig. 19B, Fig. 19C, and Fig. 19D is a diagram that illustrates another example of the uneven structure provided to the adjustment unit 8c according to this embodiment. Each of Fig. 19A to Fig. 19D is a diagram in which the surface of the adjustment unit 8c on the opening 6a side is seen from the negative X direction.

As illustrated in Fig. 18, the surface of the adjustment unit 8c according to this embodiment on the opening 6a side has first flat regions 8cb and second flat regions 8cc that neighbor each other via steps. Further, both of the first flat region 8cb and the second flat region 8cc are formed in parallel with the inner surface of the cover member B and are formed such that the heights in the thickness direction are different from each other by $\lambda_0/2 \times (2m - 1)$ (here, m represents an arbitrary positive integer, and $\lambda_0$ represents the free-space wavelength of an electromagnetic wave). Note that Fig. 18 illustrates a mode in which the heights of the first flat region 8cb and the second flat region 8cc in the thickness direction are different by $\lambda_0/2$.

Accordingly, the electromagnetic wave reflected by the first flat region 8cb and the electromagnetic wave reflected by the second flat region 8cc are caused to have an opposite phase relationship. That is, accordingly, the electromagnetic wave reflected by the first flat region 8cb and the electromagnetic wave reflected by the second flat region 8cc are caused to cancel each other, and occurrence of a reflected wave that returns to the transmit antenna 2 may thereby be inhibited.

In the uneven structure of the adjustment unit 8c according to this embodiment, as a more effective structure for inhibiting occurrence of a reflected wave, the first flat regions 8cb and the second flat regions 8cc are alternately formed such that their arrangement relationship becomes a lattice pattern (see Fig. 19A and Fig. 19B), a stripe pattern (see Fig. 19C and Fig. 19D), or a staggered pattern (not illustrated) in a plan view.

Further, the width of the first flat region 8cb and the width of the second flat region 8cc in a plan view are more desirably set to approximately $\lambda_e/2 \times (2k - 1)$ (here, k represents an arbitrary positive integer, and $\lambda_e$ represents the effective wavelength of an electromagnetic wave that passes through the adjustment unit 8c).

As described above, in the antenna device U according to this embodiment, the uneven structure is applied to the adjustment unit 8c so that it becomes possible to inhibit reflection in a case where an electromagnetic wave is incident on the adjustment unit 8c, and the transmittance for an electromagnetic wave that passes through the cover member B and the adjustment unit 8c may substantially be improved.

(Fifth Embodiment)

In the above embodiments, descriptions are made while a radar device is raised as one example to which the antenna device U is applied. However, the antenna device U according to the present disclosure may be applied to use for a communication device.

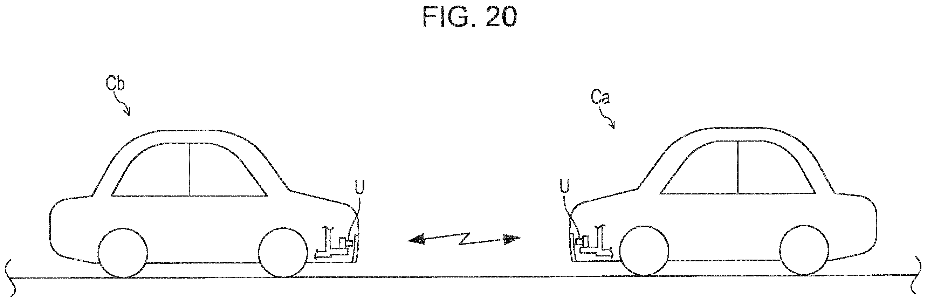

Fig. 20 is a diagram that illustrates one example of the antenna device U according to a fifth embodiment.

Fig. 20 illustrates a state where transmission and reception of electromagnetic waves are performed between the antenna device U installed in one vehicle Ca and the antenna device U installed in another vehicle Cb and communication is thereby executed (so-called inter-vehicle communication). Note that in the antenna device U according to this embodiment, instead of the above signal processing IC 4 for object detection, a signal processing IC for communication (not illustrated) may be installed.

The antenna device U according to the present disclosure may inhibit reflection of electromagnetic waves by the cover member B and may thus be used for a mode in which communication is performed with another antenna device as in this embodiment.

(Other Embodiments)

The present disclosure is not limited to the above embodiments, but various modified modes within the scope of the claims are possible. For example, it is matter of course that various combinations of the modes described in the embodiments may be used.

In the foregoing, specific examples of the present disclosure have been described in detail. However, those are merely examples and do not limit the scope of the claims. The techniques recited in the claims include various modifications and alternations of the specific examples described above. The scope of the invention is only defined by the appended claims.

The present disclosure can be realized by software, hardware, or software in cooperation with hardware.

Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a field programmable gate array (FPGA) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

An antenna device according to the present disclosure may be used for transmission and reception of electromagnetic waves via a cover member.

**Claims**

**1.** An antenna device comprising:

a cover member (B) that is arranged to cover a front region of an outside of the antenna device (U), the cover member (B) reflecting and passing through an electromagnetic wave transmitted and received by the antenna device (U);

a circuit board (1);

an antenna (2, 3) that is disposed in the circuit board (1), configured to transmit the electromagnetic wave toward the front region, and to receive the electromagnetic wave from the front region;

a housing (6) that has an opening (6a) in a front surface through which the electromagnetic wave passes and houses the circuit board (1) such that transmission and reception of the electromagnetic wave are performed via the opening (6a); and

a bracket (8) configured to retain the housing (6) and to fix the housing (6) to the cover member (B) in a front direction of the opening (6a), wherein

the bracket (8) has a sheet-shaped or plate-shaped adjuster (8c) that is disposed so as to cover a region in the front direction of the opening (6a) and to closely contact with an inner surface of the cover member (B) and configured to adjust pass characteristics of the electromagnetic wave in the cover member (B),

wherein a thickness and a relative dielectric constant of the adjuster (8c) are set such that a traveling distance of the electromagnetic wave that passes from a surface of the adjuster (8c) on the opening side to an outer surface of the cover member (B) effectively becomes $\lambda_o/2 \times n$, where n represents an arbitrary positive integer and $\lambda_o$ represents a free-space wavelength of the electromagnetic wave, and

wherein the bracket (8) is integrally molded with resin.

2. The antenna device according to Claim 1, wherein
the adjuster (8c) is formed with a substantially same thickness along a direction in which the inner surface of the cover member (B) extends.

3. The antenna device according to Claim 1, wherein
the bracket (8) has a fixer (8b) that is disposed to surround a periphery of the adjuster (8c) on the inner surface of the cover member (B) and is fixed to the inner surface of the cover member (B) by a fixing member.

4. The antenna device according to Claim 3, wherein
a thickness of the adjuster (8c) is thinner than a thickness of the fixer (8b).

5. The antenna device according to Claim 1, wherein
a surface of the adjuster (8c) on the opening side has an uneven structure that is formed with first flat regions (8cb) and second flat regions (8cc), each of the first flat regions (8cb) neighbors corresponding one second flat region (8cc) of the second flat regions (8cc) via a step, and both of the first flat regions (8cb) and the second flat regions (8cc) are formed in parallel with the inner surface of the cover member (B) and are formed such that heights of the first flat regions (8cb) and the second flat regions (8cc) in a thickness direction of the adjuster (8c) are different from each other by $\lambda_0/2 \times (2m - 1)$, where m represents an arbitrary positive integer and $\lambda_0$ represents a free-space wavelength of the electromagnetic wave.

6. The antenna device according to Claim 5, wherein
the first flat regions (8cb) and the second flat regions (8cc) are alternately formed such that an arrangement relationship between each other becomes a lattice pattern, a stripe pattern, or a staggered pattern in a plan view.

7. The antenna device according to Claim 1, wherein
on a surface on the opening side or the cover member side, the adjuster (8c) has a frequency selective structure that is configured with plural electric conductor patterns which resonate with the electromagnetic wave.

8. The antenna device according to Claim 1, wherein
the bracket (8) is configured to fix the housing (6) to the cover member (B) such that a direction in which the electromagnetic wave is transmitted to the outside of the device (U) becomes parallel with a ground.

9. The antenna device according to Claim 1, wherein
the circuit board (1) is disposed such that a board surface extends in a front- rear direction while the front direction is set as a reference.

10. The antenna device according to Claim 9, further comprising:
a dielectric lens (7) that is supported by the housing (6), condenses a beam of the electromagnetic wave transmitted by the antenna (2, 3), and sends out the beam toward the front region.

11. The antenna device according to Claim 1, further comprising:
a signal processor (4) configured to perform azimuth estimation about a target based on a reflected wave of the electromagnetic wave transmitted by the antenna (2, 3) from the target.

12. The antenna device according to Claim 1, wherein
the cover member (B) is a bumper member of a vehicle (C).

**Patentansprüche**

1. Antennenvorrichtung, umfassend:

ein Abdeckungselement (B), das zum Abdecken eines Vorderbereichs einer Außenseite der Antennenvorrichtung (U) ausgebildet ist, wobei das Abdeckungselement (B) eine von der Antennenvorrichtung (U) gesendete und empfangene elektromagnetische Welle reflektiert und passieren lässt;
eine Leiterplatte (1);
eine Antenne (2, 3), die in der Leiterplatte (1) angeordnet ist, ausgebildet zum Senden der elektromagnetischen Welle zum Vorderbereich und zum Empfangen der elektromagnetischen Welle vom Vorderbereich;
ein Gehäuse (6), das eine Öffnung (6a) in einer Vorderfläche aufweist, durch welche die elektromagnetische Welle passiert, und die Leiterplatte (1) aufnimmt, so dass Senden und Empfangen der elektromagnetischen Welle über die Öffnung (6a) erfolgt; und
einen zum Halten des Gehäuses (6) und zum Befestigen des Gehäuses (6) am Abdeckungselement (B) in einer Vorwärtsrichtung der Öffnung (6a) ausgebildeten Halter (8), wobei
der Halter (8) einen blech- oder plattenförmigen Einsteller (8c) aufweist, der so angeordnet ist, dass er einen Bereich in der Vorwärtsrichtung der Öffnung (6a) abdeckt und in engem Kontakt mit einer Innenfläche des Abdeckungselements (B) steht, und zum Einstellen von Passiereigenschaften der elektromagnetischen Welle im Abdeckungselement (B) ausgebildet ist,
wobei eine Stärke und eine relative dielektrische Konstante des Einstellers (8c) so festgelegt sind, dass eine Strahlungsstrecke der elektromagnetischen Welle, die von einer Fläche des Einstellers (8c) auf der Öffnungsseite zu einer Außenfläche des Abdeckungselements (B) passiert, effektiv $\lambda_0/2 \times n$ wird, wobei n eine beliebige positive Ganzzahl darstellt und $\lambda_0$ eine Freiraum-Wellenlänge der elektromagnetischen Welle darstellt, und
wobei der Halter (8) integral mit Harz geformt ist.

2. Antennenvorrichtung nach Anspruch 1, wobei
der Einsteller (8c) mit einer im Wesentlichen gleichen Stärke entlang einer Richtung gebildet ist, in der sich die Innenfläche des Abdeckungselements (B) erstreckt.

3. Antennenvorrichtung nach Anspruch 1, wobei
der Halter (8) einen Befestiger (8b) aufweist, der zum Umgeben eines Umfangs des Einstellers (8c) an der Innenfläche des Abdeckungselements (B) angeordnet ist und an der Innenfläche des Abdeckungselements (B) durch ein Befestigungselement befestigt ist.

4. Antennenvorrichtung nach Anspruch 3, wobei
eine Stärke des Einstellers 8c dünner ist als eine Stärke des Befestigers (8b).

5. Antennenvorrichtung nach Anspruch 1, wobei
eine Fläche des Einstellers (8c) an der Öffnungsseite eine unregelmäßige Struktur aufweist, die mit ersten flachen Bereichen (8cb) und zweiten flachen Bereichen (8cc) gebildet ist, jeder der ersten flachen Bereiche (8cb) entsprechend einem zweiten flachen Bereich (8cc) der zweiten flachen Bereiche (8cc) über einen Absatz benachbart ist, und sowohl die ersten flachen Bereiche (8cb) als auch die zweiten flachen Bereiche (8cc) parallel mit der Innenfläche des Abdeckungselements (B) gebildet sind und so gebildet sind, dass sich Höhen der ersten flachen Bereiche (8cb) und der zweiten flachen Bereiche (8cc) in einer Stärkenrichtung des Einstellers (8c) durch $\lambda_0/2 \times (2m-1)$ voneinander unterscheiden, wobei m eine beliebige positive Ganzzahl darstellt und $\lambda_0$ eine Freiraum-Wellenlänge der elektromagnetischen Welle darstellt.

6. Antennenvorrichtung nach Anspruch 5, wobei

die ersten flachen Bereiche (8cb) und die zweiten flachen Bereiche (8cc) abwechselnd gebildet sind, so dass eine Anordnungsbeziehung untereinander zu einem Gittermuster, einem Streifenmuster oder einem versetzten Muster in einer Draufsicht wird.

**7.** Antennenvorrichtung nach Anspruch 1, wobei
auf einer Fläche auf der Öffnungsseite oder der Abdeckungselementseite der Einsteller (8c) eine frequenzselektive Struktur aufweist, die mit mehreren elektrischen Leitermustern ausgebildet ist, die mit der elektromagnetischen Welle mitschwingen.

**8.** Antennenvorrichtung nach Anspruch 1, wobei der Halter (8) zum Befestigen des Gehäuses (6) am Abdeckungselement (B) ausgebildet ist, so dass eine Richtung, in der die elektromagnetische Welle zur Außenseite der Vorrichtung (U) gesendet wird, parallel mit einem Untergrund wird.

**9.** Antennenvorrichtung nach Anspruch 1, wobei
die Leiterplatte (1) so angeordnet ist, dass sich eine Plattenfläche in einer Richtung von vorne nach hinten erstreckt, wobei die Vorwärtsrichtung als eine Referenz festgelegt ist.

**10.** Antennenvorrichtung nach Anspruch 9, ferner umfassend:
eine dielektrische Linse (7), die vom Gehäuse (6) gestützt ist, einen Strahl der von der Antenne (2, 3) gesendeten elektromagnetischen Welle kondensiert und den Strahl zum Vorderbereich aussendet.

**11.** Antennenvorrichtung nach Anspruch 1, ferner umfassend: einen zum Durchführen einer Azimutschätzung zu einem Ziel auf der Basis einer reflektierten Welle der von der Antenne (2, 3) gesendeten elektromagnetischen Welle vom Ziel ausgebildeten Signalprozessor (4).

**12.** Antennenvorrichtung nach Anspruch 1, wobei
das Abdeckungselement (B) ein Stoßfängerelement eines Fahrzeugs (C) ist.

**Revendications**

**1.** Dispositif d'antenne comprenant :

un élément de capot (B) qui est disposé pour couvrir une zone avant d'un extérieur du dispositif d'antenne (U), l'élément de capot (B) réfléchissant et laissant traverser une onde électromagnétique transmise et reçue par le dispositif d'antenne (U) ;
une carte de circuits (1) ;
une antenne (2, 3) qui est disposée sur la carte de circuits (1), configurée pour transmettre l'onde électromagnétique vers la zone avant, et pour recevoir l'onde électromagnétique de la zone avant ;
un boîtier (6) qui présente une ouverture (6a) dans une surface avant à travers laquelle l'onde électromagnétique passe et abrite la carte de circuits (1) de sorte qu'une transmission et une réception de l'onde électromagnétique sont effectuées via l'ouverture (6a) ; et
un support (8) configuré pour maintenir le boîtier (6) et pour fixer le boîtier (6) à l'élément de capot (B) dans une direction avant de l'ouverture (6a), dans lequel
le support (8) présente un ajusteur en forme de feuille ou en forme de plaque (8c) qui est disposé de sorte à couvrir une zone dans la direction avant de l'ouverture (6a) et à se trouver en contact étroit avec une surface intérieure de l'élément de capot (B) et configuré pour ajuster des caractéristiques de passage de l'onde électromagnétique dans l'élément de capot (B),
dans lequel
une épaisseur et une constante diélectrique relative de l'ajusteur (8c) sont définies de sorte qu'une distance de déplacement de l'onde électromagnétique qui passe d'une surface de l'ajusteur (8c) sur le côté d'ouverture à une surface extérieure de l'élément de capot (B) devient effectivement $\lambda o/2 \times n$, où n représente un entier positif arbitraire et $\lambda o$ représente une longueur d'onde en espace libre de l'onde électromagnétique, et
dans lequel le support (8) est intégralement moulé en résine.

**2.** Le dispositif d'antenne selon la revendication 1, dans lequel
l'ajusteur (8c) est constitué d'une épaisseur substantiellement identique le long d'une direction dans laquelle la surface intérieure de l'élément de capot (B) s'étend.

3. Le dispositif d'antenne selon la revendication 1, dans lequel
le support (8) présente un fixateur (8b) qui est disposé pour entourer une périphérie de l'ajusteur (8c) sur la surface intérieure de l'élément de capot (B) et est fixé à la surface intérieure de l'élément de capot (B) par un élément de fixation.

4. Le dispositif d'antenne selon la revendication 3, dans lequel
une épaisseur de l'ajusteur (8c) est plus fine qu'une épaisseur du fixateur (8b).

5. Le dispositif d'antenne selon la revendication 1, dans lequel
une surface de l'ajusteur (8c) sur le côté d'ouverture présente une structure irrégulière qui est constituée de premières zones plates (8cb) et de deuxièmes zones plates (8cc), chacune des premières zones plates (8cb) est voisine d'une deuxième zone plate correspondante (8cc) des deuxièmes zones plates (8cc) via un pas, et les deux des premières zones plates (8cb) et des deuxièmes zones plates (8cc) sont constituées en parallèle avec la surface intérieure de l'élément de capot (B) et sont constituées de sorte que des hauteurs des premières zones plates (8cb) et des deuxièmes zones plates (8cc) dans une direction d'épaisseur de l'ajusteur (8c) sont différentes les unes des autres de $\lambda o/2 \times (2m - 1)$, où m représente un entier positif arbitraire et $\lambda o$ représente une longueur d'onde en espace libre de l'onde électromagnétique.

6. Le dispositif d'antenne selon la revendication 5, dans lequel
les premières zones plates (8cb) et les deuxièmes zones plates (8cc) sont alternativement constituées de sorte qu'une relation de disposition entre en les unes et les autres devient un schéma en maillage, un schéma en bandes ou un schéma en quinconce dans une vue en plan.

7. Le dispositif d'antenne selon la revendication 1, dans lequel
sur une surface sur le côté d'ouverture ou le côté d'élément de capot, l'ajusteur (8c) présente une structure sélective en fréquence qui est configurée avec plusieurs schémas conducteurs électriques qui résonnent avec l'onde électromagnétique.

8. Le dispositif d'antenne selon la revendication 1, dans lequel
le support (8) est configuré pour fixer le boîtier (6) à l'élément de capot (B) de sorte qu'une direction dans laquelle l'onde électromagnétique est transmise à l'extérieur du dispositif (U) devient parallèle à un sol.

9. Le dispositif d'antenne selon la revendication 1, dans lequel
la carte de circuits (1) est disposée de sorte qu'une surface de carte s'étend dans une direction avant-arrière tandis que la direction avant est définie en tant que référence.

10. Le dispositif d'antenne selon la revendication 9, comprenant en outre :
une lentille diélectrique (7) qui est soutenue par le boîtier (6), condense un faisceau de l'onde électromagnétique transmise par l'antenne (2, 3), et envoie le faisceau vers la zone avant.

11. Le dispositif d'antenne selon la revendication 1, comprenant en outre :
un processeur de signal (4) configuré pour effectuer une estimation d'azimut relative à une cible selon une onde réfléchie de l'onde électromagnétique transmise par l'antenne (2, 3) depuis la cible.

12. Le dispositif d'antenne selon la revendication 1, dans lequel
l'élément de capot (B) est un élément de pare-choc d'un véhicule (C).

# FIG. 1

# FIG. 2

FIG. 3

# FIG. 4

# FIG. 5

# FIG. 6

# FIG. 7

NO COVER MEMBER
— · — · — NO ADJUSTMENT UNIT
— · · — THICKNESS OF ADJUSTMENT UNIT 0.4 mm
• • • • • • THICKNESS OF ADJUSTMENT UNIT 0.5 mm

FIG. 8

NO COVER MEMBER
NO ADJUSTMENT UNIT
THICKNESS OF ADJUSTMENT UNIT 0.5 mm

# FIG. 9

FIG. 10

# FIG. 11

EP 3 540 851 B1

# FIG. 12

31

## FIG. 13

FIG. 14

# FIG. 15

# FIG. 16

## FIG. 17A

## FIG. 17B

# FIG. 18

FIG. 19A

8c

8cc
8cb

Z

Y ⊗ X

FIG. 19B

8c

8cc
8cb

Z

Y ⊗ X

FIG. 19C

8c

8cc
8cb

Z

Y ⊗ X

FIG. 19D

8c

8cc
8cb

Z

Y ⊗ X

FIG. 20

**EP 3 540 851 B1**

**REFERENCES CITED IN THE DESCRIPTION**

**Patent documents cited in the description**

- US 2008315050 A1
- US 6496138 A1
- US 2016231417 A1
- JP 2009103457 A